# EUROPÄISCHE PATENTSCHRIFT

(11) **EP 2 428 700 B1**
(45) Veröffentlichungstag und Bekanntmachung des Hinweises auf die Patenterteilung: **04.04.2018**
(21) Anmeldenummer: 11176372.8
(22) Anmeldetag: 03.08.2011
(51) Int. Cl.: F16H 47/04, F16H 37/08

(54) **Getriebevorrichtung mit wenigstens einem Variator**
Drive device with at least one variator
Dispositif d'engrenage doté d'au moins un variateur

(30) Priorität: 14.09.2010 DE 102010040744
(43) Veröffentlichungstag der Anmeldung: 14.03.2012
(73) Patentinhaber: ZF Friedrichshafen AG, 88046 Friedrichshafen (DE)
(72) Erfinder: Hirschmann, Frank, 94121 Salzweg (DE); Konrad, Helmut, 88326 Aulendorf (DE); Pohlenz, Jürgen, 88214 Ravensburg (DE); Baur, Erwin, 88094 Oberteuringen (DE); Fischer, Walter, 88045 Friedrichshafen (DE)

(56) Entgegenhaltungen:
- EP-A1- 0 347 594
- EP-A1- 0 521 195
- DE-A1- 19 944 792
- US-A- 5 159 855

## Beschreibung

Die Erfindung betrifft eine Getriebevorrichtung mit wenigstens einem Variator gemäß der im Oberbegriff des Patentanspruches 1 näher definierten Art.

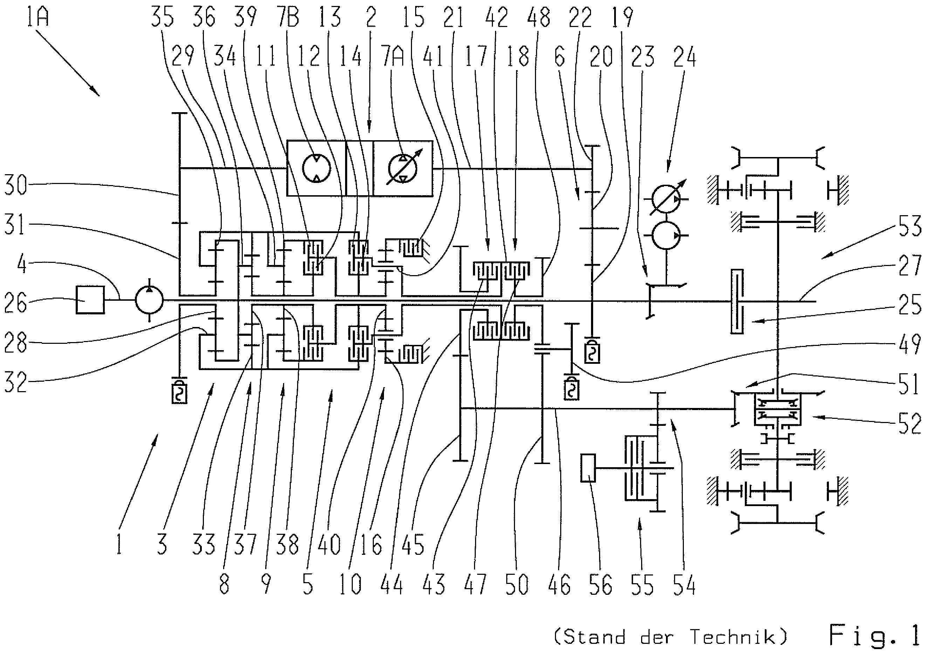

Fig. 1 zeigt einen Fahrzeugantriebsstrang 1A mit einer aus dem Stand der Technik bekannten Getriebevorrichtung 1, die einen Variator 2 zum stufenlosen Variieren einer Übersetzung der Getriebevorrichtung 1 aufweist und die mit sekundärer Leistungsverzweigung ausgebildet ist. Eine Planetengetriebeeinrichtung 3 der Getriebevorrichtung 1 ist mit einer Getriebeeingangswelle 4, einer Welle 29 des Variators 2 sowie einem Schaltgetriebe 5 gekoppelt, in dessen Bereich in Verbindung mit dem Variator 2 jeweils vier Übersetzungsbereiche für Vorwärts- und Rückwärtsfahrt darstellbar sind. Die Übersetzung der Getriebevorrichtung 1 ist innerhalb der vier Übersetzungsbereiche über den Variator 2 jeweils stufenlos veränderbar, wobei der Variator 2 im Bereich einer zweiten Welle 21 hierfür über eine Getriebeeinrichtung 6 auch mit der Getriebeeingangswelle 4 verbunden ist.

Der Variator 2 umfasst eine als Verstellpumpe mit zwei Förderrichtungen ausgeführte Hydraulikeinheit 7A und eine weitere als Konstantmotor ausgeführte Hydraulikeinheit 7B, wobei der Konstantmotor in zwei verschiedenen Drehrichtungen betreibbar ist.

Das Schaltgetriebe 5 umfasst neben der Planetengetriebeeinrichtung 3 drei weitere Planetengetriebeeinrichtungen 8 bis 10, deren Wellen zur Darstellung der vier Übersetzungsbereiche über fünf reibschlüssige Schaltelemente 11 bis 15 in der später näher beschriebenen Art und Weise miteinander koppelbar sind und die alle koaxial auf der Getriebeeingangswelle 4 angeordnet sind.

Getriebeausgangsseitig des Schaltgetriebes 5 sind zwei weitere reibschlüssige Schaltelemente 17 und 18 vorgesehen, wobei bei geschlossenem reibschlüssigem Schaltelement 17 jeweils ein Vorwärtsfahrbetrieb darstellbar ist, während bei geschlossenem reibschlüssigem Schaltelement 18 ein mit dem Fahrzeugantriebsstrang 1A und der Getriebevorrichtung 1 ausgeführtes Fahrzeug in Rückwärtsfahrtrichtung betreibbar ist.

Die Getriebeeinrichtung 6 umfasst vorliegend ein drehfest mit der Getriebeeingangswelle 4 verbundenes erstes Zahnrad 19, das mit einem Zwischenrad 20 kämmt. Das Zwischenrad 20 steht wiederum mit einem drehfest mit der Welle 21 des Variators 2 verbundenen weiteren Zahnrad 22 in Wirkverbindung. Zusätzlich steht die Getriebeeingangswelle 4 über ein Winkelgetriebe 23 mit einer Hydraulikpumpeneinheit 24 in Wirkverbindung, über welche eine Lenkeinrichtung sowie hydraulische Verbraucher eines Fahrzeuges mit Hydraulikfluid versorgbar sind.

Im Bereich eines weiteren reibschlüssigen Schaltelementes 25 ist die mit einer Antriebsmaschine 26 des Fahrzeugantriebsstranges 1A verbundene Getriebeeingangswelle 4 mit einer Antriebswelle 27 koppelbar, über welche Nebenabtriebe eines vorzugsweise als Traktor oder dergleichen ausgeführten Fahrzeuges antreibbar sind.

Die erste Planetengetriebeeinrichtung 3 ist vorliegend im Bereich eines Sonnenrades 28 über ein mit einem drehfest mit der Welle 29 des Variators 2 verbundenen Zahnrad 30 kämmenden weiteren Zahnrad 31 wirkverbunden, während ein Planetenträger 32 der ersten Planetengetriebeeinrichtung 3 mit einem Hohlrad 33 der zweiten Planetengetriebeeinrichtung 8 und einem Planetenträger 34 der dritten Planetengetriebeeinrichtung 9 drehfest verbunden ist. Ein Hohlrad 35 der ersten Planetengetriebeeinrichtung 3 ist mit einem Planetenträger 36 der zweiten Planetengetriebeeinrichtung 8 gekoppelt. Ein Sonnenrad 37 der zweiten Planetengetriebeeinrichtung 8 ist drehfest mit einem Sonnenrad 38 der dritten Planetengetriebeeinrichtung 9 verbunden.

Ein Hohlrad 39 der dritten Planetengetriebeeinrichtung 9 ist über das erste reibschlüssige Schaltelement 11 mit einem Sonnenrad 40 der vierten Planetengetriebeeinrichtung 10 koppelbar, während die Sonnenräder 37 und 38 der Planetengetriebeeinrichtungen 8 und 9 über das zweite reibschlüssige Schaltelement 12 mit dem Sonnenrad 40 der vierten Planetengetriebeeinrichtung 10 in Wirkverbindung bringbar sind. Der Planetenträger 32 der ersten Planetengetriebeeinrichtung 3, das Hohlrad 33 der zweiten Planetengetriebeeinrichtung 8 und der Planetenträger 34 der dritten Planetengetriebeeinrichtung 9 sind über das dritte reibschlüssige Schaltelement 13 mit einem Planetenträger 41 der vierten Planetengetriebeeinrichtung 10 in Wirkverbindung bringbar, der mit einem gemeinsamen Außenlamellenträger 42 der reibschlüssigen Schaltelemente 17 und 18 drehfest verbunden ist. Eine als Hohlrad ausgeführte Welle 16 der vierten Planetengetriebeeinrichtung 10 ist über das als Bremse ausgeführte reibschlüssige Schaltelement 15 drehfest darstellbar.

Ein Innenlamellenträger 43 des reibschlüssigen Schaltelementes 17 ist drehfest mit einem Zahnrad 44 verbunden, das mit einem drehfest mit einer Getriebeausgangswelle 46 der Getriebevorrichtung 1 verbundenen Stirnrad 45 kämmt. Zusätzlich ist ein Innenlamellenträger 47 des reibschlüssigen Schaltelementes 18 mit einem Stirnrad 48 gekoppelt, das über ein damit kämmendes Zwischenrad 49 mit einem ebenfalls drehfest mit der Getriebeausgangswelle 46 verbundenen weiteren Stirnrad 50 in Eingriff steht.

Die Getriebeausgangswelle 46 ist über ein Winkelgetriebe 51 mit einer Achsdifferentialgetriebeeinrichtung 52 einer als Fahrzeughinterachse ausgeführten antreibbaren Fahrzeugachse 53 wirkverbunden und über ein Stirnradgetriebe 54 über ein weiteres reibschlüssiges Schaltelement 55 mit einer zweiten antreibbaren Fahrzeugachse 56 koppelbar.

Zur Darstellung des ersten Übersetzungsbereiches für Vorwärtsfahrt oder für Rückwärtsfahrt sind die reibschlüssigen Schaltelemente 11 und 15 in geschlossenen Betriebszustand zu überführen, während die weiteren reibschlüssigen Schaltelemente 12, 13 und 14 zu öffnen sind. Liegt eine entsprechende Anforderung zum Wechsel in den zweiten Übersetzungsbereich ausgehend vom ersten Übersetzungsbereich vor, ist das erste reibschlüssige Schaltelement 11 zu öffnen und das zweite reibschlüssige Schaltelement 12 zu schließen, während das reibschlüssige Schaltelement 15 in geschlossenem Zustand und die Schaltelemente 13 und 14 in geöffnetem Zustand gehalten werden.

Soll ausgehend vom zweiten Übersetzungsbereich in den dritten Übersetzungsbereich gewechselt werden, ist das reibschlüssige Schaltelement 15 zu öffnen und das reibschlüssige Schaltelement 13 zu schließen, während bei einem Wechsel von dem dritten Übersetzungsbereich in den vierten Übersetzungsbereich das reibschlüssige Schaltelement 13 zu öffnen und das weitere reibschlüssige Schaltelement 14 bei gleichzeitig geschlossenem reibschlüssigen Schaltelement 12 in seinen geschlossenen Betriebszustand zu überführen ist.

Bei eingelegtem ersten Übersetzungsbereich ist ein mit dem Fahrzeugantriebsstrang 1A gemäß Fig. 1 ausgeführtes Fahrzeug in einem Geschwindigkeitsbereich von 0 bis ca. 6 km/h betreibbar. Während des eingelegten zweiten Übersetzungsbereiches ist das Fahrzeug in einem Geschwindigkeitsbereich von ca. 6 bis ca. 13,5 km/h betreibbar und bei eingelegtem drittem Übersetzungsbereich steht für den Betrieb des Fahrzeuges ein Geschwindigkeitsbereich von ca. 13,5 bis ca. 27 km/h zur Verfügung. Ist in der Getriebevorrichtung 1 gemäß Fig. 1 der vierte Übersetzungsbereich eingelegt, ist das Fahrzeug in einem Geschwindigkeitsbereich von ca. 27 bis ca. 58 km/h betreibbar.

Nachteilhafterweise ist ein im Bereich der antreibbaren Fahrzeugachsen 53 und 56 jeweils darstellbares Antriebsmoment sowie ein über den Fahrzeugantriebsstrang 1A darstellbarer Geschwindigkeitsbereich eines mit dem Fahrzeugantriebsstrang 1A ausgeführten Fahrzeuges nur über eine entsprechende Auslegung der Bauteile der Getriebevorrichtung 1 mit einer gewünscht hohen Lebendauer der Getriebevorrichtung 1 gemäß Fig. 1 zur Verfügung stellbar. Eine entsprechende Dimensionierung der Getriebevorrichtung 1 hat
jedoch einen hohen Bauraumbedarf der Getriebevorrichtung 1 zur Folge, der jedoch eine Implementierung in bestehende Fahrzeugkonzepte aufgrund des limitiert zur Verfügung stehenden Bauraumes im Fahrzeug erschwert.

Die US 5,159,855 A zeigt eine Getriebevorrichtung, welche die Merkmale des Oberbegriffs des Anspruchs 1 zeigt, mit wenigstens einem Variator zum stufenlosen Variieren einer Übersetzung und mit Leistungsverzweigung, wobei eine Planetengetriebeeinrichtung mit einer Getriebeeingangswelle und einem Variator sowie einem Schaltgetriebe gekoppelt ist. Die Planetengetriebeeinrichtung und das Schaltgetriebe sind auf einer Vorgelegewelle angeordnet, die über eine Getriebeeinheit mit der Getriebeeingangswelle in Wirkverbindung steht.

Die DE 199 44 792 A1 offenbart eine Getriebevorrichtung mit wenigstens einem Variator zum stufenlosen Variieren einer Übersetzung und mit Leistungsverzweigung, wobei zur optimalen Leistungsausnutzung des Getriebes ein Stirnradgetriebe als Hochtreiber vorgeschlagen wird.

Der vorliegenden Erfindung liegt daher die Aufgabe zugrunde, eine bauraumgünstige Getriebevorrichtung zur Verfügung zu stellen, mittels der sowohl ein gewünschtes Zugkraftangebot im Bereich eines Abtriebes eines Fahrzeuges als auch ein möglichst großer Geschwindigkeitsbereich mit einer hohen Lebensdauer realisierbar sind.

Erfindungsgemäß wird diese Aufgabe mit einer Getriebevorrichtung mit den Merkmalen des Patentanspruches 1 gelöst.

Die erfindungsgemäße Getriebevorrichtung umfasst wenigstens einen Variator zum stufenlosen Variieren einer Übersetzung und ist mit sekundärer Leistungsverzweigung ausgeführt. Eine Planetengetriebeeinrichtung ist mit einer Getriebeeinganswelle und dem Variator sowie mit einem Schaltgetriebe gekoppelt, in dessen Bereich in Verbindung mit dem Variator mehrere Übersetzungsbereiche darstellbar sind. Die Übersetzung der Getriebevorrichtung ist innerhalb der Übersetzungsbereiche über den Variator jeweils stufenlos veränderbar. Zusätzlich ist der Variator über eine Getriebeeinrichtung mit der Getriebeeingangswelle verbunden.

Erfindungsgemäß sind die Planetengetriebeeinrichtung und das Schaltgetriebe auf einer Vorgelegewelle angeordnet, die über eine Getriebeeinheit mit der Getriebeeingangswelle in Wirkverbindung steht. Eine Übersetzung der Getriebeeinheit ist kleiner Eins, womit die Drehzahl der Vorgelegewelle im Betrieb der Getriebevorrichtung größer als die Drehzahl der Getriebeeingangswelle ist.

Eine Getriebeeingangsleistung der erfindungsgemäßen Getriebevorrichtung ist somit mit geringem konstruktivem Aufwand auf bauraumgünstige Art und Weise im Vergleich zu der in Fig. 1 dargestellten Getriebevorrichtung bei einer der Dimensionierung der Bauteile der bekannten Getriebevorrichtung entsprechenden Dimensionierung der Bauteile der erfindungsgemäßen Getriebevorrichtung anhebbar, womit ein gewünschtes Zugkraftangebot und ein großer Geschwindigkeitsbereich eines mit der erfindungsgemäßen Getriebevorrichtung ausgebildeten Fahrzeuges realisierbar sind, ohne eine Lebensdauer der erfindungsgemäßen Getriebevorrichtung zu verkürzen.

Bei einer ebenfalls konstruktiv einfachen und kostengünstigen Ausführungsform der erfindungsgemäßen Getriebevorrichtung umfasst die Getriebeeinheit ein mit der Getriebeeingangswelle verbundenes Zahnrad, ein damit kämmendes Zwischenrad und ein mit der Vorgelegewelle verbundenes weiteres Zahnrad, das ebenfalls mit dem Zwischenrad in Eingriff steht.

Ist zwischen der Planetengetriebeeinrichtung und einer Welle des Variators ein Getriebe vorgesehen, ist der Variator trotz der größeren Getriebeeingangsleistung bei entsprechender Auslegung des Getriebes auf einfache Art und Weise in seinem optimalen Betriebsbereich betreibbar.

Bei einer kostengünstigen und konstruktiv einfachen Ausführungsform der erfindungsgemäßen Getriebevorrichtung umfasst das Getriebe zwischen der Planetengetriebeeinrichtung und der Welle des Variators ein mit einer Welle der Planetengetriebeeinrichtung verbundenes Zahnrad, ein damit kämmendes Zwischenrad und ein mit dem Zwischenrad in Eingriff stehendes sowie mit der ersten Welle des Variators verbundenes weiteres Zahnrad.

Sowohl die in den Patentansprüchen angegebenen Merkmale als auch die in den nachfolgenden Ausführungsbeispielen der erfindungsgemäßen Getriebevorrichtung angegebenen Merkmale sind jeweils für sich alleine oder in beliebiger Kombination miteinander geeignet, den erfindungsgemäßen Gegenstand weiterzubilden. Die jeweiligen Merkmalskombinationen stellen hinsichtlich der Weiterbildung des Gegenstandes nach der Erfindung keine Einschränkung dar, sondern weisen im Wesentlichen lediglich beispielhaften Charakter auf.

Weitere Vorteile und vorteilhafte Weiterbildungen der Erfindung ergeben sich aus den Patentansprüchen und dem unter Bezugnahme auf die Zeichnung prinzipmäßig beschriebenen Ausführungsbeispiel.

Es zeigt:
- Fig. 1: eine schematische Darstellung eines Fahrzeugantriebsstranges, der mit einer aus dem Stand der Technik bekannten Getriebevorrichtung ausgeführt ist; und
- Fig. 2: eine Fig. 1 entsprechende Darstellung eines mit einer erfindungsgemäßen Getriebevorrichtung ausgeführten Fahrzeugantriebsstranges.

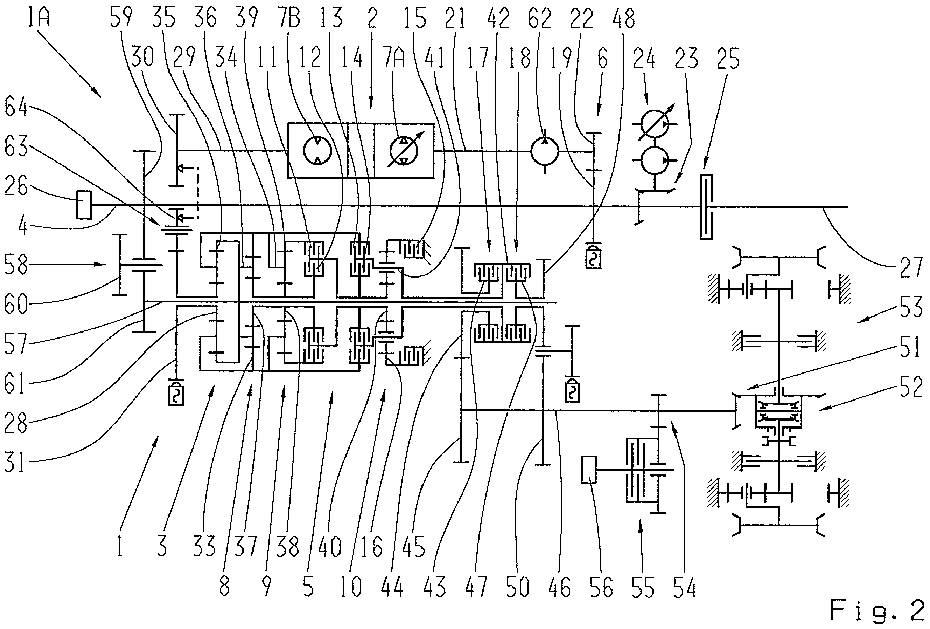

Die Getriebevorrichtung 1 gemäß Fig. 2 weist im Wesentlichen die gleichen Baugruppen wie die Getriebeeinrichtung 1 gemäß Fig. 1 auf, um vier Übersetzungsbereiche für Vorwärtsfahrt und für Rückwärtsfahrt darstellen zu können, wobei bezüglich der damit in Verbindung stehenden Funktionalität der Getriebevorrichtung 1 gemäß Fig. 2 auf die Beschreibung zu Fig. 1 verwiesen wird.

Die Getriebevorrichtung 1 gemäß Fig. 2 unterscheidet sich von der Getriebevorrichtung 1 gemäß Fig. 1 im Wesentlichen dadurch, dass die Planetengetriebeeinrichtungen 3 und 8 bis 10 sowie die reibschlüssigen Schaltelemente 11 bis 15 und die reibschlüssigen Schaltelemente 17 und 18 mit den zugeordneten Zahnrädern 44 und 48 auf einer Vorgelegewelle 57 angeordnet sind, die über eine Getriebeeinheit 58 mit der Getriebeeingangswelle 4 in Wirkverbindung steht. Eine Übersetzung der Getriebeeinheit 58 ist kleiner Eins, womit die Drehzahl der Vorgelegewelle 57 im Betrieb der Getriebevorrichtung 1 größer als die Drehzahl der Getriebeeingangswelle 4 ist.

In Abhängigkeit der Auslegung der Übersetzung der Getriebeeinheit 58 sind Drehzahlen im Bereich einer die Planetengetriebeeinrichtungen 3 und 8 bis 10 umfassenden Schaltwalze der Getriebevorrichtung 1 gemäß Fig. 1 im Vergleich zu Drehzahlen im Bereich der Schaltwalze der Getriebevorrichtung 1 gemäß Fig. 1 10 bis 20 %, vorzugsweise 12 bis 14%, bei einer besonders bevorzugten Ausführungsform der Getriebevorrichtung 1 gemäß Fig. 2 13 % höher, womit eine Getriebeeingangsleistung der Getriebevorrichtung 1 gemäß Fig. 2 im Vergleich zur Getriebevorrichtung 1 gemäß Fig. 1 größer ist. Ein die Lebensdauer bestimmendes und an der Getriebeeingangswelle 4 anliegendes Drehmoment entspricht bei entsprechender Auslegung der Getriebeeinheit 58 im Wesentlichen dem Getriebeeingangsmoment der Getriebevorrichtung 1 gemäß Fig. 1, womit eine Lebensdauer der Getriebevorrichtung 1 gemäß Fig. 2 im Wesentlichen einer Lebensdauer der Getriebevorrichtung 1 gemäß Fig. 1 entspricht.

Die Getriebeeinheit 58 umfasst ein mit der Getriebeeingangswelle 4 verbundenes Zahnrad 59, ein damit kämmendes Zwischenrad 60 und ein mit der Vorgelegewelle 57 drehfest verbundenes weiteres Zahnrad 61, wobei eine bevorzugte Zähnezahl des Zahnrades 59 gleich 35, eine bevorzugte Zähnezahl des Zwischenrades gleich 33 und eine bevorzugte Zähnezahl des weiteren Zahnrades 61 gleich 44 ist.

Die Planetengetriebeeinrichtung 3 ist über ein die Zahnräder 30 und 31 aufweisendes Getriebe 63 mit der Welle 29 des Variators 2 verbunden, wobei zwischen den Zahnrädern 30 und 31 ein Zwischenrad 64 vorgesehen ist. Die Getriebeeinrichtung 6 der Getriebevorrichtung 1 gemäß Fig. 2 ist ohne das Zwischenrad 20 der Getriebevorrichtung 1 gemäß Fig. 1 und lediglich mit den Zahnrädern 22 und 19 ausgeführt.

Mit der Getriebevorrichtung 1 gemäß Fig. 2 ist ein Fahrzeug im ersten Übersetzungsbereich in einem Geschwindigkeitsbereich von 0 bis ca. 7,6 km/h, im zweiten Übersetzungsbereich in einem Geschwindigkeitsbereich von 7,6 bis ca. 16,5 km/h, im dritten Übersetzungsbereich in einem Geschwindigkeitsbereich von ca. 16,5 bis ca. 33 km/h und im vierten Übersetzungsbereich in einem Geschwindigkeitsbereich von ca. 33 bis ca. 72,5 km/h betreibbar.

Damit ist ein Fahrzeug bei gleich großem Zugkraftangebot im Bereich der antreibbaren Fahrzeugachsen 53 und 56 mit jeweils höherer Geschwindigkeit betreibbar. Damit besteht vorteilhafterweise die Möglichkeit, ein mit der Getriebevorrichtung 1 gemäß Fig. 2 ausgebildetes Fahrzeug sowohl in einem Arbeitsmodus, der mit einem unteren Geschwindigkeitsbereich korrespondiert, als auch in einem Transportmodus, der mit einem oberen Geschwindigkeitsbereich korrespondiert, jeweils mit höheren Geschwindigkeiten zu betreiben und mit dem Fahrzeug zu verrichtende Tätigkeiten innerhalb kürzerer Zeit erledigen zu können.

Eine eine Schmieröl- und Schaltdruckpumpe darstellende Hydraulikpumpeneinrichtung 62 des Fahrzeugantriebsstranges 1A gemäß Fig. 2 ist im Vergleich zum Fahrzeugantriebsstrang 1A gemäß Fig. 1 mit der Welle 21 des Variators 2 in bauraumgünstiger Art und Weise verbunden und von dieser antreibbar, womit die Getriebevorrichtung 1 gemäß Fig. 2 in axialer Richtung einen geringeren Bauraumbedarf als die Getriebevorrichtung 1 gemäß Fig. 1 aufweist.

### Bezugszeichen

- 1: Getriebevorrichtung
- 1A: Fahrzeugantriebsstrang
- 2: Variator
- 3: Planetengetriebeeinrichtung
- 4: Getriebeeingangswelle
- 5: Schaltgetriebe
- 6: Getriebeeinrichtung
- 7A, 7B: Hydraulikeinheit
- 8 bis 10: Planetengetriebeeinrichtung
- 11 bis 15: reibschlüssiges Schaltelement
- 16: Welle der Planetengetriebeeinrichtung 10
- 17, 18: reibschlüssiges Schaltelement
- 19: erstes Zahnrad der Getriebeeinrichtung
- 20: Zwischenrad der Getriebeeinrichtung
- 21: erste Welle des Variators
- 22: weiteres Zahnrad der Getriebeeinrichtung
- 23: Winkelgetriebe
- 24: Hydraulikpumpeneinrichtung
- 25: weiteres reibschlüssiges Schaltelement
- 26: Antriebsmaschine
- 27: Antriebswelle
- 28: Sonnenrad der Planetengetriebeeinrichtung 3
- 29: zweite Welle des Variators
- 30: Zahnrad
- 31: weiteres Zahnrad
- 32: Planetenträger der Planetengetriebeeinrichtung 3
- 33: Hohlrad der Planetengetriebeeinrichtung 8
- 34: Planetenträger der Planetengetriebeeinrichtung 9
- 35: Hohlrad der Planetengetriebeeinrichtung 3
- 36: Planetenträger der Planetengetriebeeinrichtung 8
- 37: Sonnenrad der Planetengetriebeeinrichtung 8
- 38: Sonnenrad der Planetengetriebeeinrichtung 9
- 39: Hohlrad der Planetengetriebeeinrichtung 9
- 40: Sonnenrad der Planetengetriebeeinrichtung 10
- 41: Planetenträger der Planetengetriebeeinrichtung 10
- 42: Außenlamellenträger der reibschlüssigen Schaltelemente 17 und 18
- 43: Innenlamellenträger des reibschlüssigen Schaltelementes 17
- 44: Zahnrad
- 45: Stirnrad
- 46: Getriebeausgangswelle
- 47: Innenlamellenträger des reibschlüssigen Schaltelementes 18
- 48: Stirnrad
- 49: Zwischenrad
- 50: weiteres Stirnrad
- 51: Winkelgetriebe
- 52: Achsdifferentialgetriebeeinrichtung
- 53: antreibbare Fahrzeugachse
- 54: Stirnradgetriebe
- 55: reibschlüssiges Schaltelement
- 56: Antriebsachse
- 57: Vorgelegewelle
- 58: Getriebeeinheit
- 59: Zahnrad
- 60: Zwischenrad
- 61: Zahnrad
- 62: Hydraulikpumpeneinrichtung
- 63: Getriebe
- 64: Zwischenrad

## Patentansprüche

1. Getriebevorrichtung (1) mit wenigstens einem Variator (2) zum stufenlosen Variieren einer Übersetzung und mit Leistungsverzweigung, wobei eine Planetengetriebeeinrichtung (3) mit einer Getriebeeingangswelle (4) und dem Variator (2) sowie einem Schaltgetriebe (5) gekoppelt ist, in dessen Bereich in Verbindung mit dem Variator (2) mehrere Übersetzungsbereiche darstellbar sind, wobei die Übersetzung innerhalb der Übersetzungsbereiche über den Variator (2) jeweils stufenlos veränderbar ist und der Variator (2) über eine Getriebeeinrichtung (6) mit der Getriebeeingangswelle (4) verbunden ist, wobei die Planetengetriebeeinrichtung (3) und das Schaltgetriebe (5) auf einer Vorgelegewelle (57) angeordnet sind, die über eine Getriebeeinheit (58) mit der Getriebeeingangswelle (4) in Wirkverbindung steht, **dadurch gekennzeichnet, dass** eine Übersetzung der Getriebeeinheit (58) kleiner Eins ist und die Drehzahl der Vorgelegewelle (57) im Betrieb der Getriebevorrichtung (1) größer als die Drehzahl der Getriebeeingangswelle (4) ist, wobei die Getriebeeinheit (58) ein mit der Getriebeeingangswelle (4) verbundenes Zahnrad (61), ein damit kämmendes Zwischenrad (60) und ein mit der Vorgelegewelle (57) verbundenes weiteres Zahnrad (59) umfasst, das ebenfalls mit dem Zwischenrad (60) in Eingriff steht.

2. Getriebevorrichtung nach Anspruch 1, **dadurch gekennzeichnet, dass** zwischen der Planetengetriebeeinrichtung (3) und einer Welle (29) des Variators (2) ein Getriebe (63) vorgesehen ist.

3. Getriebevorrichtung nach Anspruch 2, **dadurch gekennzeichnet, dass** das Getriebe (63) ein erstes mit einer Welle (28) der Planetengetriebeeinrichtung (3) verbundenes Zahnrad (31), ein damit kämmendes Zwischenrad (64) und ein mit dem Zwischenrad in Eingriff stehendes sowie mit der Welle (29) des Variators (2) verbundenes weiteres Zahnrad (30) umfasst.

4. Getriebevorrichtung nach Anspruch 2 oder 3, **dadurch gekennzeichnet, dass** eine weitere Welle (21) des Variators (2) über die zwei Zahnräder (19, 22) umfassende Getriebeeinrichtung (6) mit der Getriebeeingangswelle (4) wirkverbunden ist.

5. Getriebevorrichtung nach Anspruch 4, **dadurch gekennzeichnet, dass** eine Hydraulikpumpeneinrichtung (62) über die weitere Welle (21) des Variators (2) antreibbar ist.

## Claims

1. Transmission apparatus (1) having at least one variator (2) for varying a transmission ratio in a continuously variable manner and having a power split means, a planetary gear mechanism device (3) being coupled to a transmission input shaft (4) and the variator (2) and to a change-speed transmission (5), in the range of which a plurality of transmission ratio ranges can be produced in conjunction with the variator (2), it being possible for the transmission ratio to be changed within the transmission ratio ranges via the variator (2) in each case in a continuously variable manner, and the variator (2) being connected via a gear mechanism device (6) to the transmission input shaft (4), the planetary gear mechanism device (3) and the change-speed transmission (5) being arranged on a countershaft (57) which is operatively connected to the transmission input shaft (4) via a gear mechanism unit (58), **characterized in that** a transmission ratio of the gear mechanism unit (58) is less than one, and the rotational speed of the countershaft (57) during operation of the transmission apparatus (1) is greater than the rotational speed of the transmission input shaft (4), the gear mechanism unit (58) comprising a gearwheel (61) which is connected to the transmission input shaft (4), an intermediate gear (60) which meshes with the said gearwheel (61), and a further gearwheel (59) which is connected to the countershaft (57) and is likewise in engagement with the intermediate gear (60).

2. Transmission apparatus according to Claim 1, **characterized in that** a gear mechanism (63) is provided between the planetary gear mechanism device (3) and a shaft (29) of the variator (2).

3. Transmission apparatus according to Claim 2, **characterized in that** the gear mechanism (63) comprises a first gearwheel (31) which is connected to a shaft (28) of the planetary gear mechanism device (3), an intermediate gear (64) which meshes with the said gearwheel (31), and a further gearwheel (30) which is in engagement with the intermediate gear and is connected to the shaft (29) of the variator (2).

4. Transmission apparatus according to Claim 2 or 3, **characterized in that** a further shaft (21) of the variator (2) is operatively connected to the transmission input shaft (4) via the gear mechanism device (6) which comprises two gearwheels (19, 22).

5. Transmission apparatus according to Claim 4, **characterized in that** a hydraulic pump device (62) can be driven via the further shaft (21) of the variator (2).

## Revendications

1. Dispositif de transmission (1) comprenant au moins un variateur (2) pour la variation continue d'une démultiplication et une ramification de puissance, un système de transmission planétaire (3) étant accouplé à un arbre d'entrée de boîte de vitesses (4) et au variateur (2) ainsi qu'à une boîte de vitesses (5), dans la région de laquelle plusieurs plages de démultiplication peuvent être constituées en association avec le variateur (2), la démultiplication pouvant à chaque fois être variée en continu à l'intérieur des plages de démultiplication par le biais du variateur (2) et le variateur (2) étant connecté à l'arbre d'entrée de boîte de vitesses (4) par le biais d'un système de transmission (6), le système de transmission planétaire (3) et la boîte de vitesses (5) étant disposés sur un arbre intermédiaire (57) qui est en liaison fonctionnelle par le biais d'une unité de transmission (58) à l'arbre d'entrée de boîte de vitesses (4), **caractérisé en ce qu'**une démultiplication de l'unité de transmission (58) est inférieure à un et la vitesse de rotation de l'arbre intermédiaire (57) pendant le fonctionnement du dispositif de transmission (1) est supérieure à la vitesse de rotation de l'arbre d'entrée de boîte de vitesses (4), l'unité de transmission (58) comprenant une roue dentée (61) connectée à l'arbre d'entrée de boîte de vitesses (4), une roue intermédiaire (60) s'engrenant avec celle-ci et une roue dentée supplémentaire (59) connectée à l'arbre intermédiaire (57), laquelle est également en prise avec la roue intermédiaire (60).

2. Dispositif de transmission selon la revendication 1, **caractérisé en ce qu'**entre le système de transmission planétaire (3) et un arbre (29) du variateur (2) est prévue une transmission (63).

3. Dispositif de transmission selon la revendication 2, **caractérisé en ce que** la transmission (63) comprend une première roue dentée (31) connectée à un arbre (28) du système de transmission planétaire (3), une roue intermédiaire (64) s'engrenant avec celle-ci et une roue dentée supplémentaire (30) en prise avec la roue intermédiaire et connectée à l'arbre (29) du variateur (2).

4. Dispositif de transmission selon la revendication 2 ou 3, **caractérisé en ce qu'**un arbre supplémentaire (21) du variateur (2) est en liaison fonctionnelle par le biais du système de transmission (6) comprenant deux roues dentées (19, 22) avec l'arbre d'entrée de boîte de vitesses (4).

5. Dispositif de transmission selon la revendication 4, **caractérisé en ce qu'**un système de pompe hydraulique (62) peut être entraîné par le biais de l'arbre supplémentaire (21) du variateur (2).
